# EUROPEAN PATENT SPECIFICATION

(11) **EP 3 933 459 B1**
(45) Date of publication and mention of the grant of the patent: **06.05.2026**
(21) Application number: 20783290.8
(22) Date of filing: 27.03.2020
(51) Int. Cl.: G02B 1/118

(54) **OPTICAL ELEMENT, CAMERA MODULE, TERMINAL AND METHOD FOR PROCESSING OPTICAL ELEMENT**
OPTISCHES ELEMENT, KAMERAMODUL, ENDGERÄT UND VERFAHREN ZUR VERARBEITUNG EINES OPTISCHEN ELEMENTS
ÉLÉMENT OPTIQUE, MODULE DE CAMÉRA, TERMINAL ET PROCÉDÉ DE TRAITEMENT D'ÉLÉMENT OPTIQUE

(30) Priority: 30.03.2019 CN 201910254135
(43) Date of publication of application: 05.01.2022
(73) Proprietor: Huawei Technologies Co., Ltd., Shenzhen, Guangdong 518129 (CN)
(72) Inventor: YE, Haishui, Shenzhen, Guangdong 518129 (CN); YUAN, Jun, Shenzhen, Guangdong 518129 (CN); YU, Feng, Shenzhen, Guangdong 518129 (CN)
(74) Representative: Gill Jennings & Every LLP
(86) International application number: PCT/CN2020/081540
(87) International publication number: WO 2020/200060

(56) References cited:
- EP-A1- 3 264 144
- WO-A1-2017/015801
- WO-A1-2018/139359
- CN-A- 1 871 530
- CN-A- 101 377 554
- CN-A- 101 377 554
- CN-A- 107 092 044
- CN-U- 203 261 398
- JP-A- H0 829 261
- TW-A- 201 301 221
- US-A- 5 995 304
- US-A1- 2010 283 185
- US-A1- 2014 016 189
- US-A1- 2018 128 943

## Description

### TECHNICAL FIELD

This application relates to the field of terminal technologies, and in particular, to an optical component, a camera module, a terminal, and an optical component processing method.

### BACKGROUND

Currently, photographing quality of a terminal has been significantly improved with improved structures of an image sensor and a lens. However, when the terminal takes photos in some environments (such as sunny days or street lamps at night), obvious ghosting or glare still exists. In this case, the photographing quality is relatively low. A mechanism for generating ghosting and glare is that stray light generated through one or more times of reflection of scene light on a surface of an optical component or a mechanical part of a camera module reaches the image sensor, and causes interference to light of the scene light that is directly transmitted by the optical component to the image sensor. Therefore, reducing reflectance of the scene light on the surface of the optical component can achieve the purpose of reducing stray light, and weakening ghosting and glare.

To reduce the reflectance of the scene light on the surface of the optical component, an anti-reflection coating may be attached to the surface of the optical component. The anti-reflection coating is used to reduce the reflectance of the surface of the optical component. However, the anti-reflection coating is usually attached to the surface of the optical component in an adhesive manner, and adhesion strength is relatively low when adhesive is applied. Consequently, adhesive strength between the anti-reflection coating and the optical component is relatively weak, and under the action of scraping by external force, the anti-reflection coating is easily scraped off as a whole from the optical component.

EP 3264144 A1 describes a camera module and a terminal. The camera module includes a cover window, an infrared cut-off filter, and an anti-reflection coating. The anti-reflection coating is on at least one surface, through which light passes, of the optical protection window, or the anti-reflection coating is on at least one surface, through which light passes, of the infrared cut-off filter. The anti-reflection coating includes conical anti-reflection structures. A bottom diameter of the conical anti-reflection structure is 40 nm to 150 nm. A top diameter of the conical anti-reflection structure is 0% to 30% of the bottom diameter. A height of the conical anti-reflection structure is 150 nm to 300 nm. A spacing between two adjacent conical anti-reflection structures is 1/5 to 1/3 of a wavelength in a visible light band. According to the camera module that has the anti-reflection coating, light reflection can be reduced, and a problem of ghosts and flare in photographing can be effectively inhibited.

US 2018/128943 A1 describes an imaging device mounted on a vehicle. The imaging device includes an imaging element, a plurality of transparent members and a housing. The imaging element is configured to capture an object and output an image signal of the object. The plurality of transparent members includes at least one lens, and is arranged on a light transmission path of light that reaches the imaging element. The housing is configured to hold the imaging element and the plurality of transparent members. Moreover, the imaging device is provided with a moth-eye structure arranged on at least one surface among the plurality of transparent members.

CN 107092044 A describes an antireflection thin film, a preparation method therefor, and a preparation method for a die of the antireflection thin film. The antireflection thin film comprises a sub-wavelength structural layer, and the sub-wavelength structural layer is provided with a projection structure. The antireflection thin film comprises the sub-wavelength structural layer and the projection structure, and the projection structure can protect the sub-wavelength structural layer, thereby preventing oil stain and fine dust from absorbing a concave-convex structure of the sub-wavelength structural layer, and avoiding the damages caused by the contact and friction between the concave-convex structure of the sub-wavelength structural layer and a hard object to the concave-convex structure. Therefore, the service life of the antireflection thin film is greatly prolonged.

CN 101377554 A describes an antireflective structure that includes: a flat layer having a surface; a fine structure layer including: fine protrusions each including: a head end part, and a base face which is at least one of: a circular base face of a truncated cone, the circular base face having diameter of circle, and a polygonal base face of a truncated pyramid, the polygonal base face having diameter of circumscribing circle of polygonal base face, the fine protrusions being arranged on the surface of the flat layer to define a pitch, wherein, with first reflective face formed in head end part of each of the fine protrusions, and second reflective face formed between fine protrusions on the surface of flat layer: each of the diameter of the circle and the diameter of the circumscribing circle is smaller than wavelength of incident electromagnetic wave, and the pitch is smaller than wavelength of incident electromagnetic wave.

Further background can be found in US 2014/016189 A1, US 2010/283185 A1, WO 2018/139359 A1 and US 5995304 A.

### SUMMARY

The invention is defined in the appended claims.

Embodiments of this application provide an optical component, a camera module, a terminal, and an optical component processing method, so as to increase adhesive strength between an anti-reflection coating and an optical component body, improve a scratch-resistant property of the anti-reflection coating, and prevent the anti-reflection coating from falling off.

To achieve the foregoing objective, the embodiments of this application use the following technical solutions:

According to a first aspect, an embodiment of this application provides an optical component as set out in claim 1.

Unlike the conventional technology, according to the optical component provided in this embodiment of this application, the optical component includes an optical component body and an anti-reflection coating, the anti-reflection coating is disposed on at least one surface of the optical component body through which light passes, the anti-reflection coating is configured to reduce reflectance of the at least one surface, and the anti-reflection coating and the optical component body are integrally formed. In this way, the anti-reflection coating and the optical component body are formed by processing a same base material, so that the adhesive strength between the optical component body and the anti-reflection coating is relatively high, and the anti-reflection coating is not easy to be scraped off as a whole from the optical component body under the action of scraping by external force. Therefore, the scratch-resistant property of the anti-reflection coating is excellent.

Optionally, the anti-reflection coating includes several protrusions disposed in an array on at least one surface of the optical component body through which light passes, and a distance W between central axes of any two adjacent protrusions is less than or equal to a minimum value in a visible light wavelength range. Because the distance *W* between the central axes of any two adjacent protrusions is less than or equal to the minimum value in the visible light wavelength range, the several protrusions included in the anti-reflection coating and air filled between the two adjacent protrusions may be used as a medium layer with a specific effective refractive index. Through proper design of a proportion of air in the medium layer, the effective refractive index of the medium layer can be adjusted between a refractive index of the optical component body and a refractive index of the air, so that light waves reflected from incident light on an interface between the air and the medium layer, and an interface between the medium layer and the optical component body can interfere with each other, so as to reduce the reflectance of the optical component, thereby achieving the purpose of weakening ghosting and glare.

Optionally, cross-sectional area of the protrusions gradually decrease from an end close to the optical component body to an end far away from the optical component body. From the end close to the optical component body to the end far away from the optical component body, the proportion of air in the medium layer formed by the several protrusions and the air filled between the two adjacent protrusions gradually increases, and the effective refractive index of the medium layer gradually decreases. The medium layer with a continuously changing effective refractive index can effectively reduce the reflectance of the optical component, thereby achieving the purpose of weakening ghosting and glare.

Optionally, the protrusion is a conical protrusion, and a distance *d* between ends of any two adjacent protrusions close to the optical component body is 0 to 0.3 times a diameter *d₁* of an end of the protrusion close to the optical component body. A diameter *d₂* of an end of the protrusion away from the optical component body is 0 to 0.5 times the diameter *d₁* of the end of the protrusion close to the optical component body. A material of the protrusion is the same as a material of the optical component body. Because the distance *d* between the ends of any two adjacent protrusions close to the optical component body is 0 to 0.3 times the diameter *d₁* of the end of the protrusion close to the optical component body, and the diameter *d₂* of the end of the protrusion away from the optical component body is 0 to 0.5 times the diameter *d₁* of the end of the protrusion close to the optical component body, from the end close to the optical component body to the end far away from the optical component body, the proportion of air in the medium layer formed by the several protrusions and the air filled between the two adjacent protrusions increases approximately continuously from 0 to 1, and the effective refractive index of the medium layer decreases approximately continuously from the refractive index of the material of the protrusion to the refractive index of the air. In addition, because the material of the protrusion is the same as the material of the optical component body, the refractive index of the material of the protrusion is equal to the refractive index of the material of the optical component body. Therefore, from the end close to the optical component body to the end far away from the optical component body, the effective refractive index of the medium layer formed by the several protrusions and the air filled between the two adjacent protrusions decreases approximately continuously from the refractive index of the material of the optical component body to the refractive index of the air, and there is no interface on which the refractive index jumps between the medium layer and the air, inside the medium layer, and between the medium layer and the optical component body. This can further reduce the reflectance of the optical component, thereby achieving the purpose of weakening ghosting and glare.

The bump can play a specific protective role on the anti-reflection coating, to prevent a foreign object from colliding with the anti-reflection coating. In addition, because the bump is located on the edge of the anti-reflection coating, the bump does not affect an anti-reflection characteristic of the anti-reflection coating.

Optionally, the bump is an annular bump, and the annular bump is disposed around the edge of the anti-reflection coating. In this way, the bump can protect the anti-reflection coating around the edge of the anti-reflection coating, thereby effectively preventing a foreign object from colliding with the anti-reflection coating.

Optionally, a difference between the height *h₂* of the bump and the thickness *h* of the anti-reflection coating is 0 µm to 10 µm. In this way, the height of the bump is moderate, which prevents the optical component from occupying large space in the camera module due to an excessive height of the bump, while effectively protecting the anti-reflection coating.

Adhesive strength between the bump and the optical component body is relatively high, and the bump is not easy to fall off from the optical component body.

According to the claimed subject-matter, the bump and the optical component body are integrally formed through molding, and a chamfer is disposed at a corner between a side surface of the bump facing the anti-reflection coating and an end face of the bump away from the optical component body. In this way, when the bump and the optical component body are integrally formed through molding, a demolding operation is facilitated. In some embodiments, the chamfer is an arc-shaped chamfer, and a radius of the arc-shaped chamfer is 0 µm to 50 µm.

Optionally, the distance *W* between the central axes of the any two adjacent protrusions is 1/5 to 1/3 times the minimum value in the visible light wavelength range. Therefore, the distance between the central axes of the two adjacent protrusions is moderate, and an incident beam of the optical component does not recognize an uneven shape of the surface of the anti-reflection coating, but recognizes the anti-reflection coating as a medium layer with a change in the effective refractive index. This avoids high density of the protrusions in the anti-reflection coating, and further avoids increasing manufacturing costs and processing difficulty of the anti-reflection coating.

In the camera module of the terminal, the outer surface of the optical protection window is in contact with the outside. Therefore, arrangement of the anti-reflection coating integrally formed with the optical protection window on the outer surface of the optical protection window can effectively prevent the anti-reflection coating from falling off and keep the structure of the optical component intact.

Optionally, the protrusion is a tapered structure, and the tapered structure includes but is not limited to a conical structure, a quadrangular pyramid structure, and a hexagonal pyramid structure. In some embodiments, the tapered structure is a conical structure.

Optionally, the protrusion is a conical protrusion, a diameter *d₁* of an end of the protrusion close to the optical component body is 40 nm to 250 nm, a height *h₁* of the protrusion is 150 nm to 350 nm, a height-width ratio of the protrusion is *α* > 3, and *α = h₁*/*d₁.* Therefore, from the end close to the optical component body to the end far away from the optical component body, the proportion of air in the medium layer in which the anti-reflection coating is located continuously changes from 0 to 1, and the effective refractive index decreases slowly. This can effectively reduce the reflectance of the optical component, thereby achieving the purpose of weakening ghosting and glare.

Optionally, total transmittance of the optical component body and the anti-reflection coating is greater than 90%. Therefore, the optical component body and the anti-reflection coating have excellent light transmission.

According to a second aspect, an embodiment of this application provides a camera module as set out in claim 9.

Because the optical component used in the camera module in this embodiment of this application is the same as the optical component provided in the foregoing embodiments of the optical component, both of the optical components can resolve a same technical problem and achieve a same expected effect.

According to a third aspect, an embodiment of this application provides a terminal as set out in claim 10.

Because the camera module used in the terminal in this embodiment of this application is the same as the camera module provided in the foregoing embodiments of the camera module, both of the camera modules can resolve a same technical problem and achieve a same expected effect.

According to a fourth aspect, an embodiment of this application provides an optical component processing method as set out in claim 11.

The optical component processing method provided in this embodiment of this application includes integrally forming the optical component body and the anti-reflection coating. During integral forming, a material of the anti-reflection coating and a material of the optical component body can penetrate each other to form a whole. In this way, adhesive strength between the optical component body and the anti-reflection coating is relatively high, and the anti-reflection coating is not easy to be scraped off as a whole from the optical component body under the action of scraping by external force. Therefore, a scratch-resistant property of the anti-reflection coating is excellent.

Optionally, the integrally forming the optical component body and the anti-reflection coating includes integrally forming the optical component body and the anti-reflection coating through one-step forming. In this way, the optical component body and the anti-reflection coating can be formed simultaneously through one-step processing, and therefore a manufacturing process is simple and an operation is convenient.

Optionally, the one-step forming includes but is not limited to injection and molding.

Optionally, the integrally forming the optical component body and the anti-reflection coating through one-step forming includes integrally forming the optical component body and the anti-reflection coating through molding. The molding is mature and the manufacturing is convenient.

Optionally, the anti-reflection coating includes several protrusions disposed in an array on at least one surface of the optical component body through which light passes, and a distance *W* between central axes of any two adjacent protrusions is less than or equal to a minimum value in a visible light wavelength range; and the integrally forming the optical component body and the anti-reflection coating includes: integrally forming the optical component body and an anti-reflection coating substrate, and placing the anti-reflection coating substrate on at least one surface of the optical component body through which light passes; and etching the anti-reflection coating substrate by using an etching process, so as to form the anti-reflection coating.

### BRIEF DESCRIPTION OF DRAWINGS

FIG. 1 is a stereoscopic diagram of a first optical component according to an embodiment of this application;
FIG. 2 is a schematic structural diagram of a cross section of a first optical component according to an embodiment of this application;
FIG. 3 is a schematic structural diagram of an anti-reflection coating in a first optical component according to an embodiment of this application;
FIG. 4 is a schematic structural diagram of an anti-reflection coating and a bump in a first optical component according to an embodiment of this application;
FIG. 5 is a schematic structural diagram of a cross section of a second optical component according to an embodiment of this application;
FIG. 6 is a schematic structural diagram of a third optical component according to an embodiment of this application;
FIG. 7 is a schematic structural diagram of a camera module according to an embodiment of this application;
FIG. 8 is a schematic structural diagram of a terminal according to an embodiment of this application;
FIG. 9 is a flowchart of a first optical component processing method according to an embodiment of this application;
FIG. 10 is a specific flowchart of processing the optical component shown in FIG. 2 by using the processing method shown in FIG. 9;
FIG. 11 is a schematic diagram of a structure formed by placing an optical component prefab in a mold cavity in a first optical component processing method according to an embodiment of this application;
FIG. 12 is a schematic diagram of a structure formed by pressing an upper mold into a bushing in a first optical component processing method according to an embodiment of this application;
FIG. 13 is a schematic structural diagram of an optical component formed through processing by using a first optical component processing method according to an embodiment of this application;
FIG. 14 is a flowchart of a second optical component processing method according to an embodiment of this application;
FIG. 15 is a specific flowchart of S102' of processing the optical component shown in FIG. 2 by using the processing method shown in FIG. 14;
FIG. 16 is a schematic diagram of a structure formed by integrally forming an optical component body and an anti-reflection coating substrate in a second optical component processing method according to an embodiment of this application;
FIG. 17 is a schematic diagram of a structure formed by etching an anti-reflection coating substrate by using an etching process in a second optical component processing method according to an embodiment of this application;
FIG. 18 is a schematic structural diagram of a mold used in a second optical component processing method according to an embodiment of this application;
FIG. 19 is a schematic diagram of a structure formed by applying a layer of glue to an anti-reflection coating substrate in a second optical component processing method according to an embodiment of this application;
FIG. 20 is a schematic diagram of a structure formed by pressing a mold onto glue in a second optical component processing method according to an embodiment of this application;
FIG. 21 is a schematic diagram of a structure formed by removing a mold in a second optical component processing method according to an embodiment of this application;
FIG. 22 is a schematic structural diagram of an optical component formed by etching in a second optical component processing method according to an embodiment of this application; and
FIG. 23 is a schematic structural diagram of an optical component after cleaning in a second optical component processing method according to an embodiment of this application.

### DESCRIPTION OF EMBODIMENTS

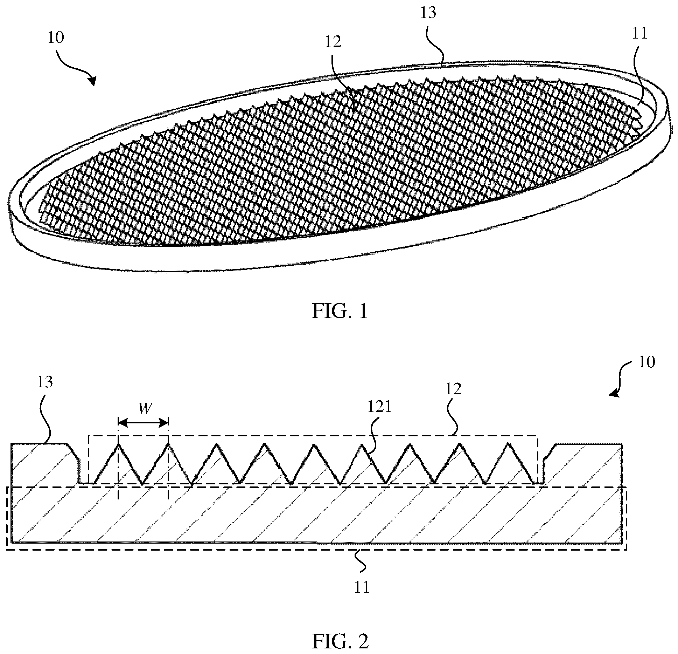

According to a first aspect, an embodiment of this application provides an optical component 10. As shown in FIG. 1 and FIG. 2, the optical component 10 includes an optical component body 11 and an anti-reflection coating 12, the anti-reflection coating 12 is disposed on at least one surface of the optical component body 11 through which light passes, the anti-reflection coating 12 is configured to reduce reflectance of the at least one surface, and the anti-reflection coating 12 and the optical component body 11 are integrally formed. The anti-reflection coating may also be referred to as an anti-reflective coating.

Unlike the conventional technology, according to the optical component 10 provided in this embodiment of this application, as shown in FIG. 1 and FIG. 2, the optical component 10 includes an optical component body 11 and an anti-reflection coating 12, the anti-reflection coating 12 is disposed on at least one surface of the optical component body 11 through which light passes, the anti-reflection coating 12 is configured to reduce reflectance of the at least one surface, and the anti-reflection coating 12 and the optical component body 11 are integrally formed. In this way, the anti-reflection coating 12 and the optical component body 11 are formed by processing a same base material, so that the adhesive strength between the optical component body 11 and the anti-reflection coating 12 is relatively high, and the anti-reflection coating 12 is not easy to be scraped off as a whole from the optical component body 11 under the action of scraping by external force. Therefore, the scratch-resistant property of the anti-reflection coating 12 is excellent.

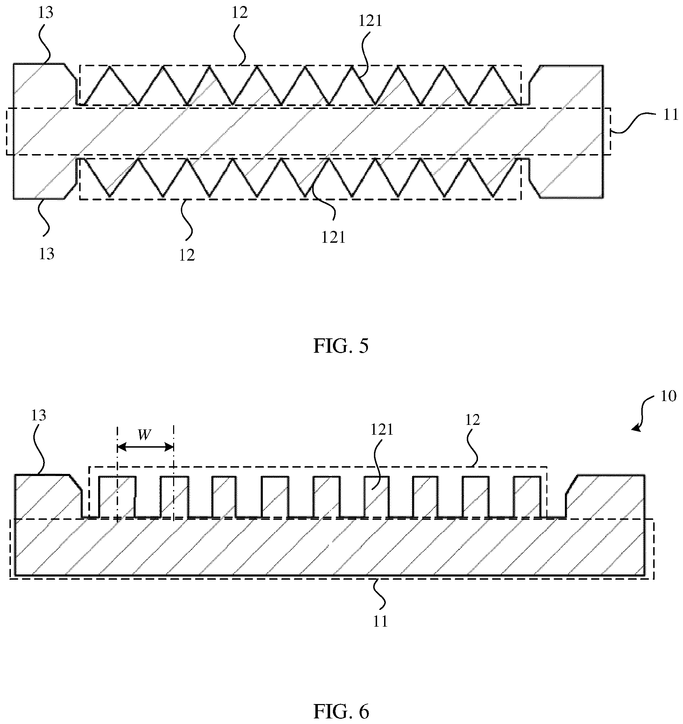

The anti-reflection coating 12 may be disposed on one surface of the optical component body 11 through which light passes, or may be disposed on two surfaces of the optical component body 11 through which light passes, which is not specifically limited herein. In some embodiments, as shown in FIG. 1 and FIG. 2, the anti-reflection coating 12 is disposed on one surface of the optical component body 11 through which light passes. In some other embodiments, as shown in FIG. 5, the anti-reflection coating 12 is disposed on two surfaces of the optical component body 11 through which light passes.

A material of the optical component body 11 may be glass or plastic, which is not specifically limited herein.

The anti-reflection coating 12 has a variety of structural forms, provided that reflectance of at least one surface of the optical component body 11 through which light passes can be reduced. In some embodiments, as shown in FIG. 2 or FIG. 6, the anti-reflection coating 12 includes several protrusions 121 disposed in an array on at least one surface of the optical component body through which light passes, and a distance W between central axes of any two adjacent protrusions 121 is less than or equal to a minimum value in a visible light wavelength range. Because the distance W between the central axes of any two adjacent protrusions 121 is less than or equal to the minimum value in the visible light wavelength range, the several protrusions 121 included in the anti-reflection coating 12 and air filled between the two adjacent protrusions 121 may be used as a medium layer with a specific effective refractive index. Through proper design of a proportion of air in the medium layer, the effective refractive index of the medium layer can be adjusted between a refractive index of the optical component body 11 and a refractive index of the air, so that light waves reflected from incident light on an interface between the air and the medium layer, and an interface between the medium layer and the optical component body 11 can interfere with each other, so as to reduce the reflectance of the optical component, thereby achieving the purpose of weakening ghosting and glare.

In the foregoing embodiment, a shape of the protrusion 121 may be a columnar shape shown in FIG. 6, or may be a shape shown in FIG. 2 in which a cross-sectional area gradually decreases from an end close to the optical component body to an end far away from the optical component body, for example, a conical shape, which is not specifically limited herein.

In some embodiments, as shown in FIG. 2, a cross-sectional area of the protrusion 121 gradually decreases from an end close to the optical component body 11 to an end far away from the optical component body 11. In this way, from the end close to the optical component body 11 to the end far away from the optical component body 11, the proportion of air in the medium layer formed by the several protrusions 121 and the air filled between the two adjacent protrusions 121 gradually increases, and the effective refractive index of the medium layer gradually decreases. The medium layer with a continuously changing effective refractive index can effectively reduce the reflectance of the optical component 10, thereby achieving the purpose of weakening ghosting and glare.

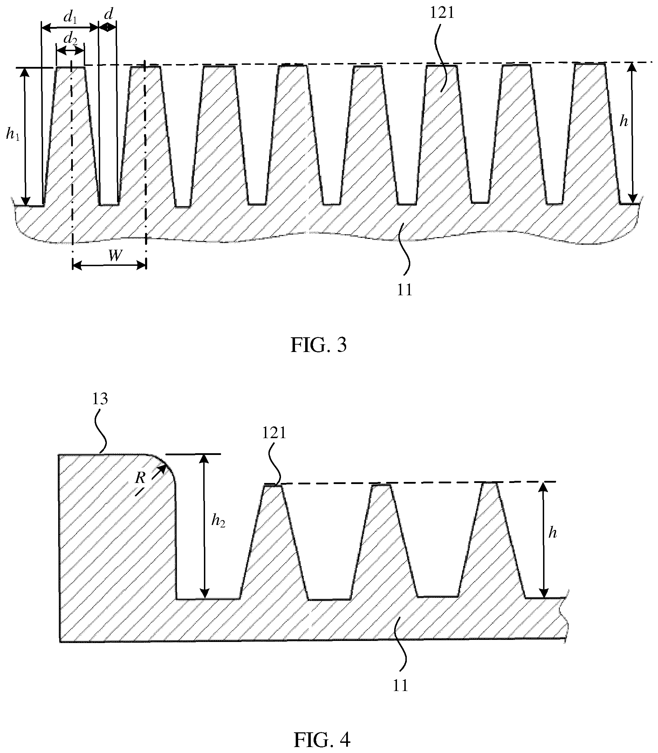

In the foregoing embodiment, optionally, as shown in FIG. 1, the protrusion 121 is a conical protrusion. As shown in FIG. 3, a distance *d* between ends of any two adjacent protrusions 121 close to the optical component body 11 is 0 to 0.3 times a diameter *d₁* of an end of the protrusion 121 close to the optical component body 11. A diameter *d₂* of an end of the protrusion 121 away from the optical component body 11 is 0 to 0.5 times the diameter *d₁* of the end of the protrusion 121 close to the optical component body 11. A material of the protrusion 121 is the same as a material of the optical component body 11. Because the distance *d* between the ends of any two adjacent protrusions 121 close to the optical component body 11 is 0 to 0.3 times the diameter *d₁* of the end of the protrusion 121 close to the optical component body 11, and the diameter *d₂* of the end of the protrusion 121 away from the optical component body 11 is 0 to 0.5 times the diameter *d₁* of the end of the protrusion 121 close to the optical component body 11, from the end close to the optical component body 11 to the end far away from the optical component body 11, the proportion of air in the medium layer formed by the several protrusions 121 and the air filled between the two adjacent protrusions 121 increases approximately continuously from 0 to 1, and the effective refractive index of the medium layer decreases approximately continuously from the refractive index of the material of the protrusion 121 to the refractive index of the air. In addition, because the material of the protrusion 121 is the same as the material of the optical component body 11, the refractive index of the material of the protrusion 121 is equal to the refractive index of the material of the optical component body 11. Therefore, from the end close to the optical component body 11 to the end far away from the optical component body 11, the effective refractive index of the medium layer formed by the several protrusions 121 and the air filled between the two adjacent protrusions 121 decreases approximately continuously from the refractive index of the material of the optical component body 11 to the refractive index of the air, and there is no interface on which the refractive index jumps between the medium layer and the air, inside the medium layer, and between the medium layer and the optical component body 11. This can further reduce the reflectance of the optical component 10, thereby achieving the purpose of weakening ghosting and glare.

In some embodiments, as shown in FIG. 1, FIG. 2, or FIG. 6, at least one surface of the optical component body 11 through which light passes is further provided with a bump 13. The bump 13 is located on an edge of the anti-reflection coating 12, as shown in FIG. 4, and a height *h₂* of the bump 13 is greater than a thickness *h* of the anti-reflection coating 12. In this way, the bump 13 can play a specific protective role on the anti-reflection coating 12, to prevent a foreign object from colliding with the anti-reflection coating 12. In addition, because the bump 13 is located on the edge of the anti-reflection coating 12, the bump 13 does not affect an anti-reflection characteristic of the anti-reflection coating 12.

In some embodiments, as shown in FIG. 1, the bump 13 is an annular bump, and the annular bump is disposed around the edge of the anti-reflection coating 12. In this way, the bump 13 can protect the anti-reflection coating 12 around the edge of the anti-reflection coating 12, thereby effectively preventing a foreign object from colliding with the anti-reflection coating 12.

In some embodiments, as shown in FIG. 4, a difference between the height *h₂* of the bump 13 and the thickness *h* of the anti-reflection coating 12 is 0 µm to 10 µm. In this way, the height of the bump 13 is moderate, which prevents the optical component 10 from occupying large space in the camera module due to an excessive height of the bump 13, while effectively protecting the anti-reflection coating 12.

In some embodiments, as shown in FIG. 1, FIG. 2, or FIG. 6, the bump 13 and the optical component body 11 are integrally formed. In this way, adhesive strength between the bump 13 and the optical component body 11 is relatively high, and the bump 13 is not easy to fall off from the optical component body 11.

According to the claimed subject-matter, the bump 13 and the optical component body 11 are integrally formed through molding, as shown in FIG. 2 or FIG. 6, and a chamfer is disposed at a corner between a side surface of the bump 13 facing the anti-reflection coating 12 and an end face of the bump 13 away from the optical component body 11. In this way, when the bump 13 and the optical component body 11 are integrally formed through molding, a demolding operation is facilitated. The chamfer may be an oblique chamfer, or may be an arc-shaped chamfer, which is not specifically limited herein. In some embodiments, as shown in FIG. 4, the chamfer is an arc-shaped chamfer, and a radius *R* of the arc-shaped chamfer is 0 µm to 50 µm.

In some embodiments, as shown in FIG. 2 or FIG. 6, the distance *W* between the central axes of the any two adjacent protrusions 121 is 1/5 to 1/3 times the minimum value in the visible light wavelength range. In this way, the distance between the central axes of the two adjacent protrusions 121 is moderate, and the several protrusions 121 included in the anti-reflection coating 12 and air filled between the two adjacent protrusions 121 may be used as a medium layer with a specific effective refractive index to reduce the reflectance. This avoids high density of the protrusions 121 in the anti-reflection coating 12, and further avoids increasing manufacturing costs and processing difficulty of the anti-reflection coating 12.

Optionally, the optical component body 11 is an optical protection window, a lens, or an infrared cut-off filter of the camera module. In some embodiments, the optical component body 11 is an optical protection window of the camera module, and at least an outer surface of the optical protection window is provided with the anti-reflection coating 12. It should be noted that the outer surface of the optical protection window is a surface on the optical protection window facing the outside of the terminal when the optical protection window is applied to the camera module on the terminal. In the camera module of the terminal, the outer surface of the optical protection window is in contact with the outside. Therefore, arrangement of the anti-reflection coating 12 integrally formed with the optical protection window on the outer surface of the optical protection window can effectively prevent the anti-reflection coating from falling off and keep the structure of the optical component 10 intact.

In some embodiments, the protrusion 121 is a tapered structure, and the tapered structure includes but is not limited to a conical structure, a quadrangular pyramid structure, and a hexagonal pyramid structure. In some embodiments, as shown in FIG. 1, the tapered structure is a conical structure. In some embodiments, the projection 121 may alternatively be a part of a rotating ellipse.

In some embodiments, as shown in FIG. 1, the protrusion is a conical protrusion, and as shown in FIG. 3, a diameter *d₁* of an end of the protrusion 121 close to the optical component body 11 is 40 nm to 250 nm, a height *h₁* of the protrusion 121 is 150 nm to 350 nm, a height-width ratio of the protrusion 121 is *α* > 3, and *α = h₁*/*d₁.* Therefore, from the end close to the optical component body 11 to the end far away from the optical component body 11, the proportion of air in the medium layer in which the anti-reflection coating 12 is located continuously changes from 0 to 1, and the effective refractive index decreases slowly. This can effectively reduce the reflectance of the optical component, thereby achieving the purpose of weakening ghosting and glare. When the heights of the several protrusions 121 are equal, the thickness of the anti-reflection coating 12 is *h = h₁.* If the heights of the several projections 121 are not equal, the thickness *h* of the anti-reflection coating 12 is the height of the projection 121 having the maximum height.

In some embodiments, as shown in FIG. 2 or FIG. 6, total transmittance of the optical component body 11 and the anti-reflection coating 12 is greater than 90%. Therefore, the optical component body 11 and the anti-reflection coating 12 have excellent light transmission.

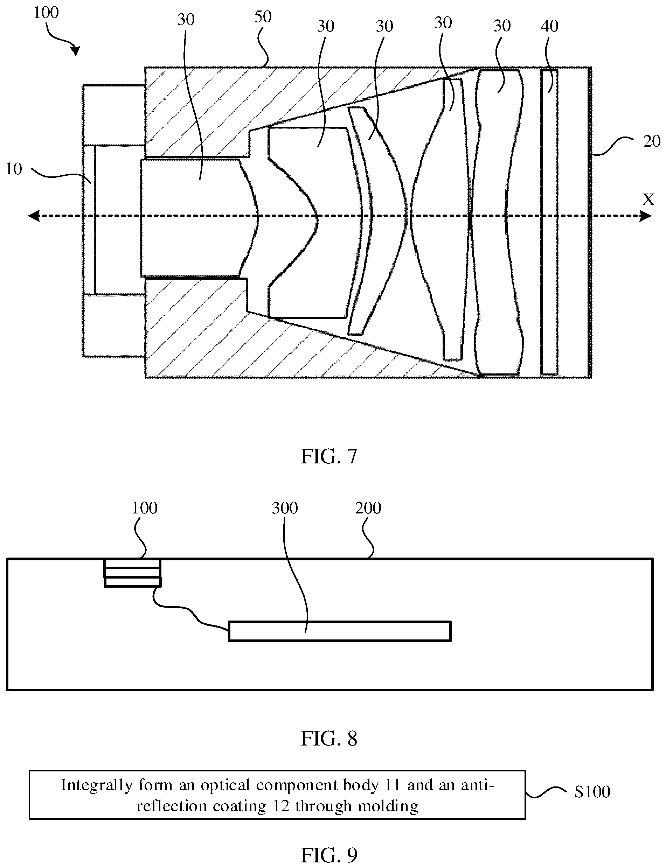

According to a second aspect, as shown in FIG. 7, an embodiment of this application provides a camera module 100, including at least one optical component 10 and an image sensor 20, where the optical component 10 is the optical component 10 according to any one of the foregoing embodiments; the at least one optical component 10 and the image sensor 20 are sequentially arranged in an optical axis direction X of the camera module 100; and the at least one optical component 10 is located on a light incident side of the image sensor 20.

Because the optical component 10 used in the camera module 100 in this embodiment of this application is the same as the optical component 10 provided in the foregoing embodiments of the optical component 10, both of the optical components 10 can resolve a same technical problem and achieve a same expected effect.

The at least one optical component 10 may include one optical component 10, or may include a plurality of optical components 10. When the at least one optical component 10 includes one optical component 10, the optical component 10 may be one of an optical protection window, a lens, and an infrared cut-off filter. When the at least one optical component 10 includes a plurality of optical components 10, the plurality of optical components 10 may be two or more of an optical protection window, a lens, and an infrared cut-off filter.

In some embodiments, as shown in FIG. 7, the at least one optical component 10 includes one optical component, and the optical component serves as an optical protection window. In addition to including the optical component 10 and the image sensor 20, the camera module 100 further includes a lens 30, an infrared cut-off filter 40, and a lens barrel 50.

According to a third aspect, as shown in FIG. 8, an embodiment of this application provides a terminal, including a terminal body 200, a camera module 100, and a circuit board 300, where the camera module 100 is the camera module 100 in the foregoing embodiments, the camera module 100 is disposed on the terminal body 200, the circuit board 300 is disposed in the terminal body 200, and an image sensor of the camera module 100 is electrically connected to the circuit board 300.

Because the camera module 100 used in the terminal in this embodiment of this application is the same as the camera module provided in the foregoing embodiments of the camera module 100, both of the camera modules 100 can resolve a same technical problem and achieve a same expected effect.

According to a fourth aspect, an embodiment of this application provides an optical component processing method. As shown in FIG. 2 or FIG. 6, the optical component 10 includes an optical component body 11 and an anti-reflection coating 12, the anti-reflection coating 12 is disposed on at least one surface of the optical component body 11 through which light passes, the anti-reflection coating 12 is configured to reduce reflectance of the at least one surface, and the method for processing the optical component 10 includes S100 of integrally forming the optical component body 11 and the anti-reflection coating 12.

It should be noted that integrally forming the optical component body 11 and the anti-reflection coating 12 means forming a base material of the optical component body 11 and a base material of the anti-reflection coating 12 into a whole, and then processing surface features of the optical component body 11 and the anti-reflection coating 12 on the base material of the optical component body 11 and the base material of the anti-reflection coating 12, respectively; or completing processing of surface features of the optical component body 11 and the anti-reflection coating 12 while forming a base material of the optical component body 11 and a base material of the anti-reflection coating 12, but does not mean that the optical component body 11 and the anti-reflection coating 12 are separately processed and then connected as a whole.

The method for processing the optical component 10 provided in this application includes integrally forming the optical component body 11 and the anti-reflection coating 12. In this way, the anti-reflection coating 12 and the optical component body 11 are formed by processing a same material, so that adhesive strength between the optical component body 11 and the anti-reflection coating 12 is relatively high, and the anti-reflection coating 12 is not easy to be scraped off as a whole from the optical component body 11 under the action of scraping by external force. Therefore, a scratch-resistant property of the anti-reflection coating 12 is excellent.

In some embodiments, S100 includes integrally forming the optical component body 11 and the anti-reflection coating 12 through one-step forming. The one-step forming is a processing technique in which a part is manufactured in one step, without requiring processing for two or more steps. Integrally forming the optical component body 11 and the anti-reflection coating 12 through one-step forming can simplify the processing procedure of the optical component body 11 and the anti-reflection coating 12, and improve processing efficiency.

It should be noted that the anti-reflection coating 12 may be disposed on one surface of the optical component body 11 through which light passes, or may be disposed on two surfaces of the optical component body 11 through which light passes. When the anti-reflection coating 12 is disposed on two surfaces of the optical component body 11 through which light passes, if the optical component body 11 and the anti-reflection coating 12 are integrally formed through one-step forming, the anti-reflection coatings 12 on two surfaces are formed simultaneously with the optical component body 11.

Optionally, the one-step forming includes but is not limited to injection and molding.

In some embodiments, as shown in FIG. 9, the integrally forming the optical component body 11 and the anti-reflection coating 12 through one-step forming includes integrally forming the optical component body 11 and the anti-reflection coating 12 through molding. The molding is mature and the manufacturing is convenient.

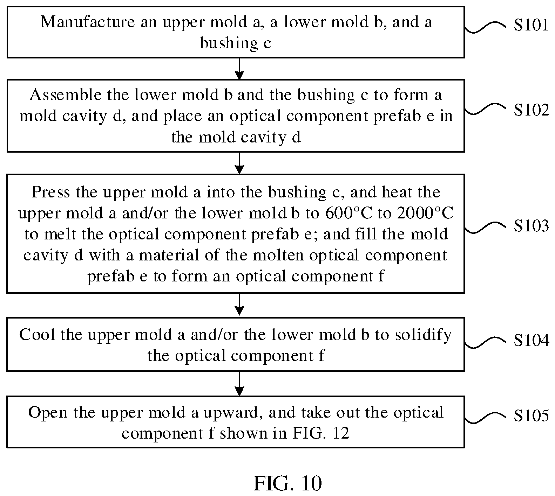

For example, the optical component body 11, the anti-reflection coating 12, and the bump 13 of the optical component shown in FIG. 2 are integrally formed of the same material, the material of the optical component is glass, and the anti-reflection coating 12 is disposed on only one surface of the optical component body 11. During manufacturing of the optical component shown in FIG. 2, as shown in FIG. 10, the integrally forming the optical component body 11 and the anti-reflection coating 12 through molding may include the following steps:

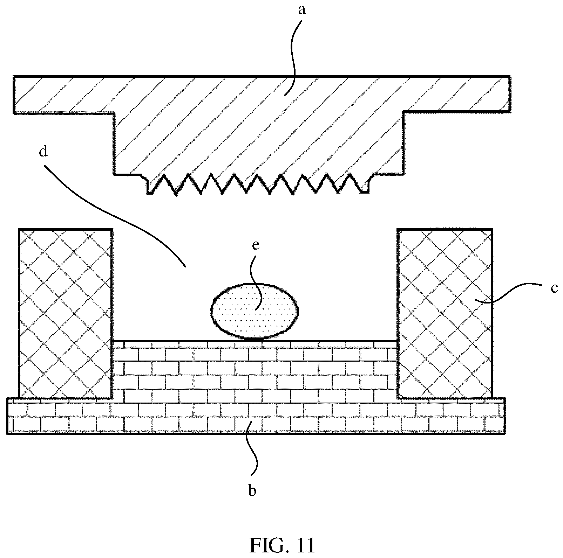

S101. Manufacture an upper mold a, a lower mold b, and a bushing c shown in FIG. 11. A molding surface of the upper mold a has several concave surfaces corresponding to the surfaces of the several projections 121 of the anti-reflection coating 12. A molding surface of the lower mold b is a plane. A heat-resistant temperature of the upper mold a, the lower mold b, and the bushing c is greater than 800°C. The bushing c functions to seal and fix the upper mold a and the lower mold b. A depth of the concave surface of the molding surface of the upper mold a is *h₁,* a diameter of the bottom of the concave surface is *d₂,* a diameter of the top (that is, an opening) of the concave surface is *d₁,* and a distance between central axes of two adjacent concave surfaces is *W*. An edge of the molding surface of the upper mold a has a concave surface corresponding to the surface of the bump 13, and a depth of the concave surface is *h₂.*

S102. As shown in FIG. 11, assemble the lower mold b and the bushing c to form a mold cavity d, and place an optical component prefab e in the mold cavity d, where a material of the optical component prefab e is glass, or may be another transparent material.

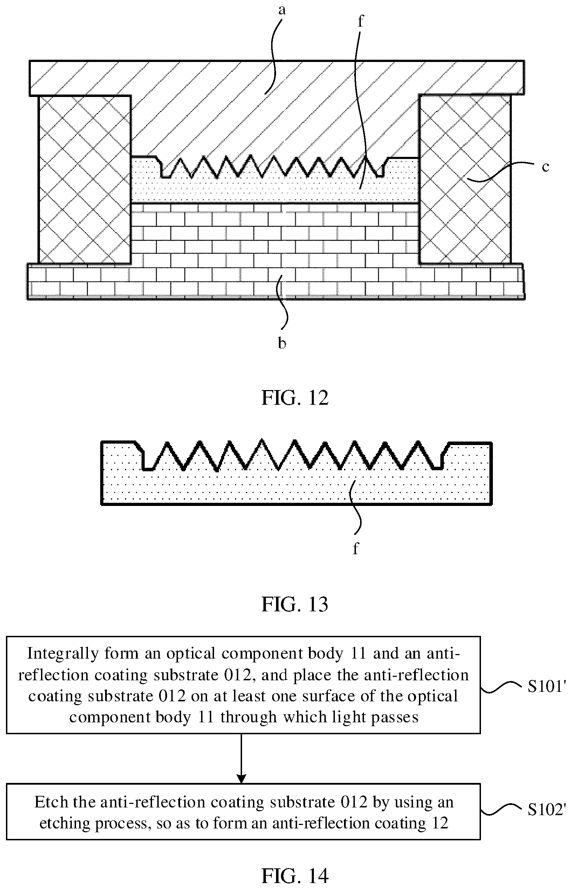

S103. As shown in FIG. 12, press the upper mold a into the bushing c, and heat the upper mold a and/or the lower mold b to 600°C to 2000°C to melt the optical component prefab e; and fill the mold cavity d with the material of the molten optical component prefab e to form an optical component f.

S104. Cool the upper mold a and/or the lower mold b to solidify the optical component f.

S105. Open the upper mold a upward, and take out the optical component f shown in FIG. 13.

When the anti-reflection coating 12 is disposed on two surfaces of the optical component body 11 through which light passes, if the optical component body 11 and the anti-reflection coating 12 are integrally formed through one-step forming, the anti-reflection coatings 12 on two surfaces are formed simultaneously with the optical component body 11. Similarly, steps S101 to S105 may be used, in which the lower mold b is replaced with a mold having several concave surfaces corresponding to the surfaces of the several protrusions 121 of the anti-reflection coating 12 on the molding surface, that is, the lower mold b is similar to the molding surface of the upper mold a.

When the optical component is manufactured through injection, the optical component shown in FIG. 2 is used as an example to manufacture a mold in which the mold cavity d is formed, as shown in FIG. 11. A combination of the upper mold a, the lower mold b, and the bushing c shown in FIG. 11 may be manufactured to form the mold cavity d, or a mold of another shape may be used to form the mold cavity d. The mold is provided with an injection hole through which an injection machine injects molten glass or another transparent material such as plastic into the mold cavity d. The mold is cooled to solidify the optical component, and the mold is opened to take out the optical component shown in FIG. 13.

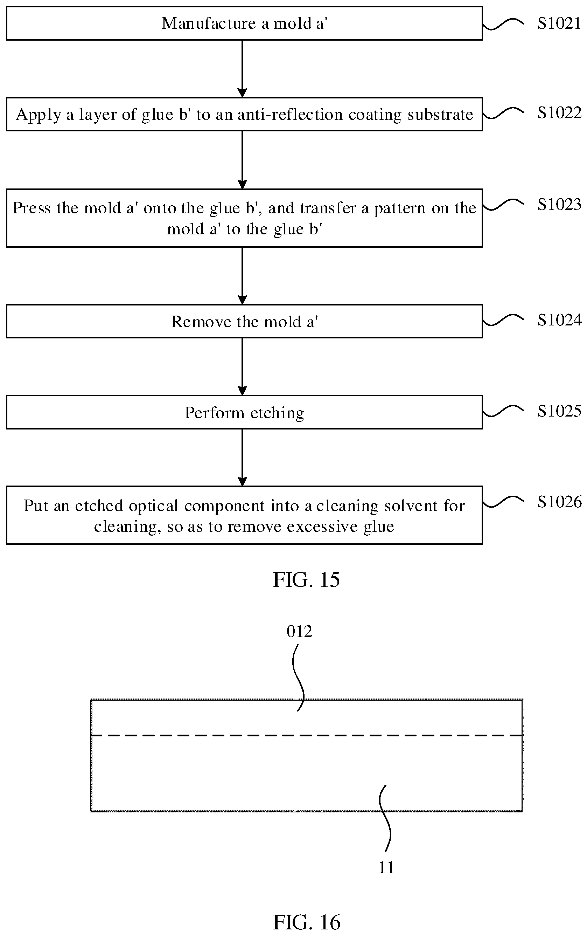

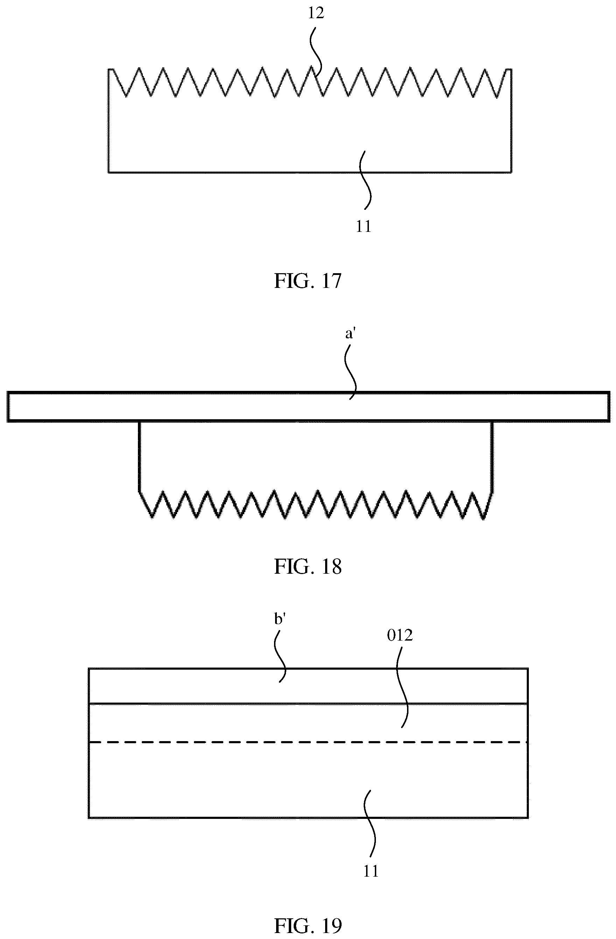

In some other embodiments, as shown in FIG. 2 or FIG. 6, the anti-reflection coating 12 includes several protrusions 121 disposed in an array on at least one surface of the optical component body 11 through which light passes, and a distance W between central axes of any two adjacent protrusions 121 is less than or equal to a minimum value in a visible light wavelength range. The optical component 10 may be formed by using an etching process. As shown in FIG. 14, S100 includes: S101' of integrally forming the optical component body 11 and the anti-reflection coating substrate 012, and placing the anti-reflection coating substrate 012 on at least one surface of the optical component body 11 through which light passes; and S102' of etching the anti-reflection coating substrate 012 by using the etching process, to form the anti-reflection coating 12. For example, during manufacturing of the optical component shown in FIG. 2, a structure obtained after S101' is completed may be shown in FIG. 16, and a structure obtained after S102' is completed may be shown in FIG. 17.

For example, as shown in FIG. 15, during manufacturing of the optical component shown in FIG. 2, S102' may include the following steps:

S1021. Manufacture a mold a' shown in FIG. 18. A molding surface of the mold a' has several concave surfaces corresponding to the surfaces of the several projections 121 of the anti-reflection coating 12. For example, a depth of a concave surface of the molding surface of the mold a' is *h₁,* a diameter of the bottom of the concave surface is *d₂,* a diameter of the top (that is, an opening) of the concave surface is *d₁,* and a distance between central axes of two adjacent concave surfaces is *W*. An edge of the molding surface of the mold a' has a concave surface corresponding to the surface of the bump 13, and a depth of the concave surface is *h₂.* The mold a' may be an ultraviolet light-transmitting mold (ultraviolet transmittance is greater than 70%) or a heat-resistant mold, where a heat-resistant temperature of the mold is greater than 150 degrees.

S1022. As shown in FIG. 19, apply a layer of glue b' to the anti-reflection coating substrate 012. A thickness of the glue b' is at least greater than 500 nm, and the glue b' may be UV-curable glue or heat-curable glue.

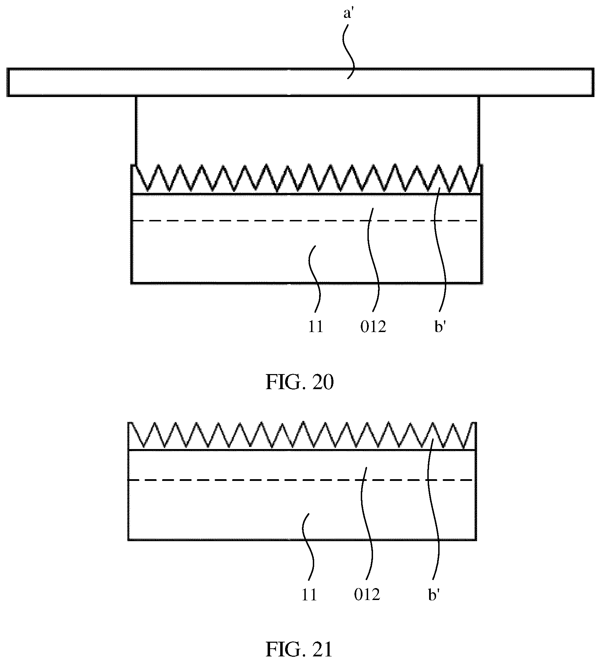

S1023. As shown in FIG. 20, press the mold a' onto the glue b', and transfer a pattern on the mold a' to the glue b' through ultraviolet irradiation curing or heating curing after the pressing of the mold a', depending on different curing types of the glue b'.

S1024. Remove the mold a', where a structure after removal of the mold a' is shown in FIG. 21.

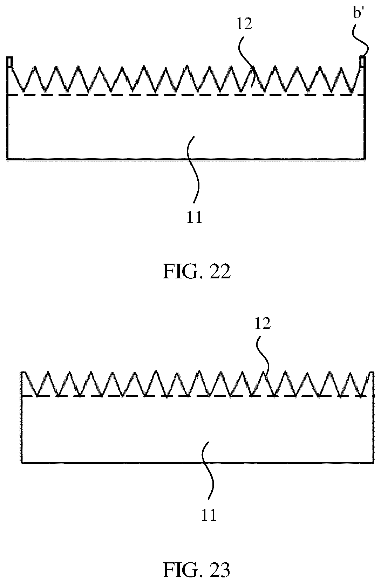

S1025. Put the structure shown in FIG. 21 into a dry etching device or a wet etching device for etching, so as to remove materials (including a material of the glue b' and a material of the anti-reflection coating substrate) of a same thickness at various positions on an upper surface of the structure, and obtain the optical component shown in FIG. 22.

S1026. Put the etched optical component into a cleaning solvent for cleaning, so as to remove excessive glue, and obtain the optical component shown in FIG. 23.

The anti-reflection coating 12 may be disposed on one surface of the optical component body 11 through which light passes, or may be disposed on two surfaces of the optical component body 11 through which light passes. When the anti-reflection coating 12 is disposed on two surfaces of the optical component body 11 through which light passes, the method includes: integrally forming the optical component body 11, a first anti-reflection coating substrate, and a second anti-reflection coating substrate, and positioning the first anti-reflection coating substrate and the second anti-reflection coating substrate respectively on the two surfaces of the optical component body 11 through which light passes, where the first anti-reflection coating substrate and the second anti-reflection coating substrate refer to the anti-reflection coating substrate 012; etching the first anti-reflection coating substrate by using the etching process, to form a first anti-reflection coating; and etching the second anti-reflection coating substrate by using the etching process, to form a second anti-reflection coating. For a process of forming the first anti-reflection coating and the second anti-reflection coating, refer to steps S1021 to S1026.

In the description of this specification, the specific features, structures, materials, or characteristics may be combined in a proper manner in any one or more of the embodiments or examples.

Finally, it should be noted that the foregoing embodiments are merely intended for describing the technical solutions of this application, but not for limiting this application. Although this application is described in detail with reference to the foregoing embodiments, persons of ordinary skill in the art should understand that they may still make modifications to the technical solutions described in the foregoing embodiments of this application.

## Claims

1. An optical component (10), comprising an optical component body (11) and an anti-reflection coating (12), wherein the anti-reflection coating is disposed on at least one surface of the optical component body through which light passes, the anti-reflection coating is configured to reduce reflectance of the at least one surface, and the anti-reflection coating and the optical component body are integrally formed by molding a same base material,
wherein the at least one surface is further provided with a bump (13), the bump is located on an edge of the anti-reflection coating, and a height *h₂* of the bump is greater than a thickness *h* of the anti-reflection coating, wherein the bump and the optical component body are integrally formed,
wherein the optical component body is an optical protection window (11) for a camera module (100), and at least an outer surface of the optical protection window is provided with the anti-reflection coating, and
wherein a chamfer is disposed at a corner between a side surface of the bump facing the anti-reflection coating and an end face of the bump away from the optical component body.

2. The optical component according to claim 1, wherein the anti-reflection coating (12) comprises several protrusions (121) disposed in an array on a surface of the optical component body, and a distance W between central axes of any two adjacent protrusions is less than or equal to a minimum value in a visible light wavelength range.

3. The optical component according to claim 2, wherein cross-sectional areas of the protrusion gradually decrease from an end close to the optical component body to an end far away from the optical component body.

4. The optical component according to claim 3, wherein the protrusion is a conical protrusion, and a distance *d* between ends of any two adjacent protrusions close to the optical component body is 0 to 0.3 times a diameter *d₁* of an end of the protrusion close to the optical component body; a diameter *d₂* of an end of the protrusion away from the optical component body is 0 to 0.5 times the diameter *d₁* of the end of the protrusion close to the optical component body; and a material of the protrusion is the same as a material of the optical component body.

5. The optical component according to any one of claims 1 to 4, wherein the bump (13) is an annular bump, and the annular bump is disposed around the edge of the anti-reflection coating.

6. The optical component according to any one of claims 1 to 5, wherein a difference between the height *h₂* of the bump (13) and the thickness *h* of the anti-reflection coating (12) is 0 µm to 10 µm.

7. The optical component according to any one of claims 2 to 4, wherein the distance W between the central axes of the any two adjacent protrusions (121) is 1/5 to 1/3 times the minimum value in the visible light wavelength range.

8. The optical component according to claim 3 or 4, wherein the protrusion (121) is a conical protrusion, the diameter *d₁* of the end of the protrusion close to the optical component body (11) is 40 nm to 250 nm, a height *h₁* of the protrusion is 150 nm to 350 nm, a height-width ratio of the protrusion is *α >* 3, and *α = h₁*/*d₁.*

9. A camera module (100), comprising at least one optical component (10) and an image sensor (20), wherein the optical component is the optical component according to any one of claims 1 to 8; the at least one optical component and the image sensor are sequentially arranged in an optical axis direction of the camera module; and the at least one optical component is located on a light incident side of the image sensor.

10. A terminal (200), comprising a terminal body, a camera module (100), and a circuit board (300), wherein the camera module is disposed on the terminal body, the circuit board is disposed in the terminal body, and an image sensor of the camera module is electrically connected to the circuit board,
the camera module comprises at least one optical component (10) and an image sensor (20), wherein the optical component is the optical component according to any one of claims 1 to 8; the at least one optical component and the image sensor are sequentially arranged in an optical axis direction of the camera module; and the at least one optical component is located on a light incident side of the image sensor.

11. An optical component processing method, wherein the optical component (10) comprises an optical component body (11) and an anti-reflection coating (12), the anti-reflection coating is disposed on at least one surface of the optical component body through which light passes, the anti-reflection coating is configured to reduce reflectance of the at least one surface, and the processing method comprises:
integrally forming the optical component body (11) and the anti-reflection coating (12) by molding a same base material,
wherein the at least one surface is further provided with a bump (13), the bump is located on an edge of the anti-reflection coating, and a height *h₂* of the bump is greater than a thickness *h* of the anti-reflection coating, wherein the bump and the optical component body are integrally formed,
wherein the optical component body is an optical protection window for a camera module, and at least an outer surface of the optical protection window is provided with the anti-reflection coating, and
wherein a chamfer is disposed at a corner between a side surface of the bump facing the anti-reflection coating and an end face of the bump away from the optical component body.

12. The processing method according to claim 11, wherein the integrally forming the optical component body and the anti-reflection coating comprises:
integrally forming the optical component body and the anti-reflection coating through one-step forming.

13. The processing method according to claim 12, wherein the integrally forming the optical component body and the anti-reflection coating through one-step forming comprises:
integrally forming the optical component body and the anti-reflection coating through molding.

14. The processing method according to claim 11, wherein the anti-reflection coating comprises several protrusions disposed in an array on the at least one surface; a distance *W* between central axes of any two adjacent protrusions is less than or equal to a minimum value in a visible light wavelength range; and the integrally forming the optical component body and the anti-reflection coating comprises:
integrally forming the optical component body and an anti-reflection coating substrate, and placing the anti-reflection coating substrate on at least one surface of the optical component body through which light passes; and
etching the anti-reflection coating substrate by using an etching process, so as to form the anti-reflection coating.

## Patentansprüche

1. Optische Komponente (10), die einen optischen Komponentenkörper (11) und eine Antireflexionsbeschichtung (12) umfasst, wobei die Antireflexionsbeschichtung auf mindestens einer Oberfläche des optischen Komponentenkörpers, die von Licht passiert wird, angeordnet ist, die Antireflexionsbeschichtung konfiguriert ist, um einen Reflexionsgrad der mindestens einen Oberfläche zu reduzieren, und die Antireflexionsbeschichtung und der optische Komponentenkörper durch Formen aus demselben Grundmaterial einstückig ausgebildet sind,
wobei die mindestens eine Oberfläche ferner mit einer Erhebung (13) bereitgestellt ist, die Erhebung sich an einem Rand der Antireflexionsbeschichtung befindet, und eine Höhe *h₂* der Erhebung größer als eine Dicke h der Antireflexionsbeschichtung ist, wobei die Erhebung und der optische Komponentenkörper einstückig ausgebildet sind, wobei es sich bei dem optischen Komponentenkörper um ein optisches Schutzfenster (11) für ein Kameramodul (100) handelt, und mindestens eine Außenoberfläche des optischen Schutzfensters mit einer Antireflexionsbeschichtung bereitgestellt ist, und wobei eine Fase an einer Ecke zwischen einer Seitenoberfläche der Erhebung, die der Antireflexionsbeschichtung zugewandt ist, und einer Endfläche der Erhebung, die von dem optischen Komponentenkörper abgewandt ist, angeordnet ist.

2. Optische Komponente nach Anspruch 1, wobei die Antireflexionsbeschichtung (12) mehrere Vorsprünge (121) umfasst, die in einer Anordnung auf einer Oberfläche des optischen Komponentenkörpers angeordnet sind, und ein Abstand *W* zwischen Mittelachsen zweier benachbarter Vorsprünge kleiner als oder gleich einem Minimalwert in einem Wellenlängenbereich sichtbaren Lichts ist.

3. Optische Komponente nach Anspruch 2, wobei Querschnittsflächen des Vorsprungs von einem Ende nahe dem optischen Komponentenkörper zu einem Ende weit entfernt von dem optischen Komponentenkörper allmählich abnehmen.

4. Optische Komponente nach Anspruch 3, wobei der Vorsprung ein konischer Vorsprung ist, und ein Abstand d zwischen Enden zweier benachbarter Vorsprünge nahe dem optischen Komponentenkörper das 0- bis 0,3-Fache des Durchmessers *d₁* eines Endes des Vorsprungs nahe dem optischen Komponentenkörper beträgt; ein Durchmesser *d₂* eines Endes des Vorsprungs entfernt von dem optischen Komponentenkörper das 0- bis 0,5-Fache des Durchmessers *d₁* des Endes des Vorsprungs nahe dem optischen Komponentenkörper beträgt; und ein Material des Vorsprungs dasselbe wie ein Material des optischen Komponentenkörpers ist.

5. Optische Komponente nach einem der Ansprüche 1 bis 4, wobei es sich bei der Erhebung (13) um eine ringförmige Erhebung handelt und die ringförmige Erhebung um den Rand der Antireflexionsbeschichtung angeordnet ist.

6. Optische Komponente nach einem der Ansprüche 1 bis 5, wobei ein Unterschied zwischen der Höhe *h₂* der Erhebung (13) und der Dicke h der Antireflexionsbeschichtung (12) 0 µm bis 10 µm beträgt.

7. Optische Komponente nach einem der Ansprüche 2 bis 4, wobei der Abstand *W* zwischen den Mittelachsen zweier benachbarter Vorsprünge (121) das 1/5- bis 1/3-Fache des Minimalwerts in dem Wellenlängenbereich sichtbaren Lichts beträgt.

8. Optische Komponente nach Anspruch 3 oder 4, wobei der Vorsprung (121) ein konischer Vorsprung ist, wobei der Durchmesser *d₁* des Endes des Vorsprungs nahe dem optischen Komponentenkörper (11) 40 nm bis 250 nm beträgt, eine Höhe *h₁* des Vorsprungs 150 nm bis 350 nm beträgt, ein Verhältnis von Höhe zu Breite des Vorsprungs *α >* 3 ist, und *α = h₁*/*d₁.*

9. Kameramodul (100), das mindestens eine optische Komponente (10) und einen Bildsensor (20) umfasst, wobei die optische Komponente die optische Komponente nach einem der Ansprüche 1 bis 8 ist; die mindestens eine optische Komponente und der Bildsensor in Richtung der optischen Achse des Kameramoduls nacheinander eingerichtet sind; und die mindestens eine optische Komponente sich auf einer Lichteinfallseite des Bildsensors befindet.

10. Endgerät (200), das einen Endgerätkörper, ein Kameramodul (100) und eine Platine (300) umfasst, wobei das Kameramodul auf dem Endgerätkörper angeordnet ist, die Platine in dem Endgerätkörper angeordnet ist und ein Bildsensor des Kameramoduls elektrisch mit der Platine verbunden ist,
das Kameramodul mindestens eine optische Komponente (10) und einen Bildsensor (20) umfasst, wobei es sich bei der optischen Komponente um die optische Komponente nach einem der Ansprüche 1 bis 8 handelt; die mindestens eine optische Komponente und der Bildsensor in Richtung der optischen Achse des Kameramoduls nacheinander eingerichtet sind; und die mindestens eine optische Komponente sich auf einer Lichteinfallseite des Bildsensors befindet.

11. Verfahren für eine Bearbeitung optischer Komponenten, wobei die optische Komponente (10) einen optischen Komponentenkörper (11) und eine Antireflexionsbeschichtung (12) umfasst, die Antireflexionsbeschichtung auf mindestens einer Oberfläche des optischen Komponentenkörpers, die von Licht passiert wird, angeordnet ist, die Antireflexionsbeschichtung konfiguriert ist, um den Reflexionsgrad der mindestens einen Oberfläche zu reduzieren, und das Bearbeitungsverfahren umfasst:
einstückiges Ausbilden des optischen Komponentenkörpers (11) und der Antireflexionsbeschichtung (12) aus demselben Grundmaterial,
wobei die mindestens eine Oberfläche ferner mit einer Erhebung (13) bereitgestellt ist, die Erhebung sich an einem Rand der Antireflexionsbeschichtung befindet, und eine Höhe *h₂* der Erhebung größer als eine Dicke h der Antireflexionsbeschichtung ist,
wobei die Erhebung und der optische Komponentenkörper einstückig ausgebildet sind, wobei es sich bei dem optischen Komponentenkörper um ein optisches Schutzfenster für ein Kameramodul handelt, und mindestens eine Außenoberfläche des optischen Schutzfensters mit einer Antireflexionsbeschichtung bereitgestellt ist, und
wobei eine Fase an einer Ecke zwischen einer Seitenoberfläche der Erhebung, die der Antireflexionsbeschichtung zugewandt ist, und einer Endfläche der Erhebung, die von dem optischen Komponentenkörper abgewandt ist, angeordnet ist.

12. Bearbeitungsverfahren nach Anspruch 11,
wobei das einstückige Ausbilden des optischen Komponentenkörpers und der Antireflexionsbeschichtung umfasst:
einstückiges Ausbilden des optischen Komponentenkörpers und der Antireflexionsbeschichtung durch einstufiges Ausbilden.

13. Bearbeitungsverfahren nach Anspruch 12,
wobei das einstückige Ausbilden des optischen Komponentenkörpers und der Antireflexionsbeschichtung durch einstufiges Ausbilden umfasst:
einstückiges Ausbilden des optischen Komponentenkörpers und der Antireflexionsbeschichtung durch Formen.

14. Bearbeitungsverfahren nach Anspruch 11,
wobei die Antireflexionsbeschichtung mehrere Vorsprünge umfasst, die in einer Anordnung auf der mindestens einen Oberfläche angeordnet sind; ein Abstand *W* zwischen Mittelachsen zweier benachbarter Vorsprünge kleiner als oder gleich einem Minimalwert in einem Wellenlängenbereich sichtbaren Lichts ist; und das einstückige Ausbilden des optischen Komponentenkörpers und der Antireflexionsbeschichtung umfasst:
einstückiges Ausbilden des optischen Komponentenkörpers und eines Antireflexionsbeschichtungssubstrats, und Platzieren des Antireflexionsbeschichtungssubstrats auf mindestens einer Oberfläche des optischen Komponentenkörpers, die von Licht passiert wird; und
Ätzen des Antireflexionsbeschichtungssubstrats mittels eines Ätzprozesses, um die Antireflexionsbeschichtung auszubilden.

## Revendications

1. Composant optique (10), comprenant un corps de composant optique (11) et un revêtement antireflet (12), dans lequel le revêtement antireflet est disposé sur au moins une surface du corps de composant optique à travers laquelle la lumière passe, le revêtement antireflet est conçu pour réduire la réflectance de l'au moins une surface, et le revêtement antireflet et le corps de composant optique sont formés intégralement par moulage d'un même matériau de base,
dans lequel l'au moins une surface est en outre pourvue d'une bosse (13), la bosse est située sur un bord du revêtement antireflet, et une hauteur *h₂* de la bosse est supérieure à une épaisseur h du revêtement antireflet, dans lequel la bosse et le corps du composant optique sont formés d'un seul tenant,
dans lequel le corps du composant optique est une fenêtre de protection optique (11) pour un module de caméra (100), et au moins une surface extérieure de la fenêtre de protection optique est pourvue d'un revêtement antireflet, et
dans lequel un chanfrein est disposé dans un coin entre une surface latérale de la bosse faisant face à la couche antireflet et une face d'extrémité de la bosse éloignée du corps du composant optique.

2. Composant optique selon la revendication 1, dans lequel le revêtement antireflet (12) comprend plusieurs protubérances (121) disposées en réseau sur une surface du corps du composant optique, et une distance *W* entre des axes centraux de deux quelconques protubérances adjacentes est inférieure ou égale à une valeur minimale dans une gamme de longueurs d'onde de lumière visible.

3. Composant optique selon la revendication 2, dans lequel des surfaces de section transversale de la protubérance diminuent progressivement d'une extrémité proche du corps du composant optique à une extrémité éloignée du corps du composant optique.

4. Composant optique selon la revendication 3, dans lequel la protubérance est une protubérance conique, et une distance d entre des extrémités de deux protubérances adjacentes proches du corps du composant optique est de 0 à 0,3 fois un diamètre *d₁* d'une extrémité de la protubérance proche du corps du composant optique ; un diamètre *d₂* d'une extrémité de la protubérance éloignée du corps du composant optique est de 0 à 0,5 fois le diamètre *d₁* de l'extrémité de la protubérance proche du corps du composant optique ; et un matériau de la protubérance est le même qu'un matériau du corps du composant optique.

5. Composant optique selon l'une quelconque des revendications 1 à 4, dans lequel la bosse (13) est une bosse annulaire, et la bosse annulaire est disposée autour du bord du revêtement antireflet.

6. Composant optique selon l'une quelconque des revendications 1 à 5, dans lequel une différence entre la hauteur *h₂* de la bosse (13) et l'épaisseur h du revêtement antireflet (12) est comprise entre 0 µm et 10 µm.

7. Composant optique selon l'une quelconque des revendications 2 à 4, dans lequel la distance *W* entre les axes centraux des deux quelconques protubérances adjacentes (121) est de 1/5 à 1/3 de la valeur minimale dans la gamme des longueurs d'onde de la lumière visible.

8. Composant optique selon la revendication 3 ou 4, dans lequel la protubérance (121) est une protubérance conique, le diamètre *d₁* de l'extrémité de la protubérance proche du corps du composant optique (11) est de 40 nm à 250 nm, une hauteur *h₁* de la protubérance est de 150 nm à 350 nm, un rapport hauteur-largeur de la protubérance est *α* > 3, et *α = h₁*/*d₁.*

9. Module de caméra (100), comprenant au moins un composant optique (10) et un capteur d'image (20), dans lequel le composant optique est le composant optique selon l'une quelconque des revendications 1 à 8 ; l'au moins un composant optique et le capteur d'image sont disposés séquentiellement dans une direction de l'axe optique du module de la caméra ; et l'au moins un composant optique est situé sur une face du capteur d'image qui reçoit la lumière.

10. Terminal (200), comprenant un corps de terminal, un module de caméra (100), et une carte de circuit imprimé (300), dans lequel le module de caméra est disposé sur le corps de terminal, la carte de circuit imprimé est disposée dans le corps de terminal, et un capteur d'image du module de caméra est connecté électriquement à la carte de circuit imprimé,
le module de caméra comprend au moins un composant optique (10) et un capteur d'image (20), dans lequel le composant optique est le composant optique selon l'une quelconque des revendications 1 à 8 ; l'au moins un composant optique et le capteur d'image sont disposés séquentiellement dans une direction de l'axe optique du module de la caméra ; et l'au moins un composant optique est situé sur une face du capteur d'image qui reçoit la lumière.

11. Procédé de traitement d'un composant optique, dans lequel le composant optique (10) comprend un corps de composant optique (11) et un revêtement antireflet (12), le revêtement antireflet est disposé sur au moins une surface du corps du composant optique à travers laquelle la lumière passe, le revêtement antireflet est conçu pour réduire la réflectance de l'au moins une surface, et le procédé de traitement comprend :
la formation intégrale du corps du composant optique (11) et du revêtement antireflet (12) en moulant un même matériau de base,
dans lequel l'au moins une surface est en outre pourvue d'une bosse (13), la bosse est située sur un bord du revêtement antireflet, et une hauteur *h₂* de la bosse est supérieure à une épaisseur h du revêtement antireflet, dans lequel la bosse et le corps du composant optique sont formés d'un seul tenant,
dans lequel le corps du composant optique est une fenêtre de protection optique pour un module de caméra, et au moins une surface extérieure de la fenêtre de protection optique est pourvue d'un revêtement antireflet, et
dans lequel un chanfrein est disposé dans un coin entre une surface latérale de la bosse faisant face au revêtement antireflet et une face d'extrémité de la bosse éloignée du corps du composant optique.

12. Procédé de traitement selon la revendication 11,
dans lequel la formation intégrale du corps du composant optique et du revêtement antireflet comprend :
la formation intégrale du corps du composant optique et du revêtement antireflet par un formage en une étape.

13. Procédé de traitement selon la revendication 12,
dans lequel la formation intégrale du corps du composant optique et du revêtement antireflet par un formage en une étape comprend :
la formation intégrale du corps du composant optique et du revêtement antireflet par moulage.

14. Procédé de traitement selon la revendication 11,
dans lequel le revêtement antireflet comprend plusieurs protubérances disposées en réseau sur l'au moins une surface ; une distance *W* entre des axes centraux de deux quelconques protubérances adjacentes est inférieure ou égale à une valeur minimale dans une gamme de longueurs d'onde de lumière visible ; et la formation intégrale du corps du composant optique et du revêtement antireflet comprend :
la formation intégrale du corps du composant optique et d'un substrat de revêtement antireflet, et le placement du substrat de revêtement antireflet sur au moins une surface du corps du composant optique traversée par la lumière ; et
la gravure du substrat du revêtement antireflet en utilisant un procédé de gravure, de manière à former le revêtement antireflet.
